# EUROPÄISCHE PATENTSCHRIFT

(11) **EP 3 483 407 B1**
(45) Veröffentlichungstag und Bekanntmachung des Hinweises auf die Patenterteilung: **19.02.2020**
(21) Anmeldenummer: 18194386.1
(22) Anmeldetag: 14.09.2018
(51) Int. Cl.: F02B 37/02, F01N 13/10, F01L 13/00, F02D 13/06, F02B 37/00

(54) **BRENNKRAFTMASCHINE UND VERFAHREN ZUM BETREIBEN DER BRENNKRAFTMASCHINE**
COMBUSTION ENGINE AND METHOD FOR OPERATING THE COMBUSTION ENGINE
MOTEUR À COMBUSTION INTERNE ET PROCÉDÉ DE FONCTIONNEMENT DU MOTEUR À COMBUSTION INTERNE

(30) Priorität: 14.11.2017 DE 102017220191
(43) Veröffentlichungstag der Anmeldung: 15.05.2019
(73) Patentinhaber: Bayerische Motoren Werke Aktiengesellschaft, 80809 München (DE)
(72) Erfinder: Leinhos, Dirk Christian, 82194 Gröbenzell (DE); Schwarz, Christian, 81245 Muenchen (DE)

(56) Entgegenhaltungen:
- DE-A1-102010 055 059
- DE-A1-102014 104 402
- DE-C1- 3 439 999
- FR-A1- 2 844 552
- US-A1- 2016 290 220

## Beschreibung

Die Erfindung betrifft eine Brennkraftmaschine mit den Merkmalen aus dem Oberbegriff der Patentansprüche 1 und 2 und Verfahren zum Betreiben der Brennkraftmaschine gemäß den Patentansprüchen 8 bis 10.

Zum technischen Umfeld wird beispielsweise auf die Europäische Patentschrift EP 2 115 284 B1 hingewiesen. Aus dieser ist eine Brennkraftmaschine mit 8 Zylindern in V-Bauart, mit einer Abgasanlage mit einem ersten und einem zweiten Abgasturbolader bekannt, wobei von einem ersten, einem zweiten, einem dritten und einem vierten, in Reihe nebeneinander angeordneten Zylinder eine erste Zylinderbank und von einem fünften, einem sechsten, einem siebten und einem achten, in Reihe nebeneinander angeordneten Zylinder eine zweite, der ersten Zylinderbank gegenüberliegende Zylinderbank gebildet ist, wobei die Brennkraftmaschine von Zylinder zu Zylinder eine Zündfolge von 90° Kurbelwinkel aufweist, wobei die Abgasanlage einen ersten, einen zweiten, einen dritten und einen vierten Abgasstrang von den Zylindern zu den zwei Abgasturboladern aufweist, und wobei einem Abgasstrang jeweils zwei Zylinder und zwei Abgassträngen jeweils ein Abgasturbolader zugeordnet ist, wobei zwei, einem Abgasstrang zugeordnete Zylinder einen Zündabstand von 360° Kurbelwinkel aufweisen und dass der erste und der zweite, einem Abgasturbolader zugeordnete Abgasstrang eine um 180° Kurbelwinkel zueinander verschobene Zündfolge aufweist.

Weiter ist aus der europäischen Patentschrift EP 0 247 631 B1 eine Auspuffanlage eines Verbrennungsmotors bekannt. Dieser weist auf:
Eine Mehrzahl von einander unabhängiger Passagen, die jeweils einzeln mit einer Austrittsöffnung eines Zylinders des Motors verbunden sind und zu einer Verbindungsstelle mehrerer voneinander unabhängiger Passagen führen, und mit
wenigstens einer Verbindungspassage, die wenigstens zwei voneinander unabhängige Passagen an von der Verbindungsstelle stromauf gelegenen Stellen miteinander verbindet,
wobei die Verbindungspassage wenigstens zwei Abzweigarme beinhaltet, die jeweils von einer unabhängigen Passage an einer der genannten Stellen abzweigen und an dieser Stelle in Richtung auf die Austrittsöffnung gerichtet sind, und
in einem von der genannten Stelle stromab gelegenen Bereich der Äquivalenzdurchmesser der unabhängigen Passage geringer ist als stromauf an dieser Stelle.

Weiter wird zum technischen Umfeld auf die Patentschrift Nr. 7000941 aus der Deutschen Demokratischen Republik hingewiesen, aus der eine Leitvorrichtung für radial beaufschlagte Turbinenräder bekannt ist. Es wird eine Leitvorrichtung beansprucht, für radial beaufschlagte Turbinenräder, insbesondere für heiße Gase, wobei diese mindestens einen axial zur Turbinenachse verschiebbaren Leitschaufelkranz umfasst und dieser Leitschaufelkranz wahlweise und wenigstens teilweise derart in den Druckmittelstrom vor der Laufschaufelung mindestens eines Turbinenrads einer Turbine hineingeschoben werden kann, dass dadurch eine Änderung der Durchflussbedingungen für das Druckmittel, je nach Form, Richtung und Durchflussquerschnitten der Leitschaufeln erfolgt, zum Zwecke, dadurch das Turbinenlaufrad mit nach Menge,
Druck- und Temperatur veränderlicher Druckmittelenergie zu beaufschlagen.

Eine Segmentturbine ist beispielsweise aus der französischen Patentanmeldung FR 2 801 072 A1 bekannt, deren Fluten jedoch keine axiale Trennwand aufweisen und damit keine Zweipunkt-Variabilität des Abgas-Massenstroms ermöglicht.

Eine Zwillingstromturbine ist beispielsweise aus der Deutschen Offenlegungsschrift DE 10 2007 017 826 A1 bekannt.

Weitere Brennkraftmaschinen mit einem Abgasturbolader sind beispielsweise aus der Deutschen Offenlegungsschrift DE 10 2010 055 059 A1 und dem Deutschen Patent DE 34 39 999 C1 und der Deutschen Offenlegungsschrift DE 10 2014 104 402 A1 und der Französischen Offenlegungsschrift FR 2 884 552 A1 und der US 2016/290220 A1 bekannt.

Heutige bekannte Turbinen von Abgasturboladern mit variablem Abgas-Massenstrom sind typischerweise mit einem variablen Vorleitrat (VTG) ausgestattet und bisher nur für einflutige Turbinen ausgeführt. Aufgrund von erforderlichen Spielen der Leitschaufeln und deren Verstelleinrichtung, sind die ertragbaren Turbineneintrittstemperaturen von VTGs typischerweise niedriger als bei Turbinen mit fester Geometrie, insbesondere für Brennkraftmaschinen, die nach dem Ottoprinzip arbeiten. Ausführungen, die hohe Temperaturen vertragen sind wegen der erforderlichen hoch temperaturfesten Werkstoffe wesentlich teurer. Es existiert somit aktuell keine kostengünstige Lösung für einen variablen Massenstrom für zweiflutige Turbinen, auch Twin-Scroll-Turbinen genannt.

Aufgabe der vorliegenden Erfindung ist es, eine kostengünstige Lösung für einen variablen Abgas-Massenstrom für zweiflutige Turbinen aufzuzeigen.

Diese Aufgabe wird durch die Merkmale im kennzeichnenden Teil des Patentanspruchs 1 und die Merkmale im kennzeichnenden Teil des Patentanspruchs 2 gelöst.

Vorteilhafte Weiterbildungen der Erfindung sind in den Unteransprüchen beschrieben.

Um sowohl eine Flutentrennung, als auch eine Zweipunkt-Variabilität des Abgas-Massenstroms zu ermöglichen, wird erfindungsgemäß eine Brennkraftmaschine mit einer Segmentturbine vorgeschlagen, deren Voluten zusätzlich eine axiale Trennwand aufweisen (Twin-Scroll) und die an die Auslasskanäle angeschlossen ist, wobei jeder Auslasskanal für ein Gaswechsel-Auslassventil vorgesehen ist. Es handelt sich somit um eine "segmentierte Zwillingsstromturbine".

Unter einer segmentierten Zwillingsstromturbine wird eine Turbine eines Abgasturboladers verstanden, deren Turbinengehäuse über zwei weitgehend gegenüberliegende Twin-Scrolls verfügt. Gegenüber einem Twin-Scroll sind bei einer segmentierten Zwillingsstromturbine die Flutentrennung um 90° gedreht, d. h. die Trennwand erstreckt sich koaxial zu einer Drehachse der Turbine. Jeder Twin-Scroll leitet Abgas radial umlaufend auf das Turbinenrad, wobei die zwei Scrolls des ersten Twin-Scroll axial voneinander beabstandet sind und den Scrolls des zweiten Twin-Scroll gegenüber liegen. Somit bilden der erste Scroll des ersten Twin-Scrolls eine erste Abgaseintrittsebene auf das Turbinenrad und der zweite Scroll des zweiten Twin-Scrolls eine zweite, von der ersten Abgaseintrittsebene axial beabstandete zweite Abgaseintrittsebene auf das Turbinenrad. Alle vier Scrolls sind von dem Turbinengehäuse bis zum Turbinenrad vollständig voneinander getrennt. Eine gattungsgemäße segmentierte Zwillingstromturbine ist beispielsweise aus der deutschen Offenlegungsschrift DE 10 2011 016 528 A1 bekannt. Dieses bekannte Turbinengehäuse weist jedoch keine Flutenverbindungen auf.

Das Abschalten der Fluten kann grundsätzlich über den Ventiltrieb, beispielsweise über deaktivierbare Gaswechsel-Auslassventile, beispielsweise mittels eines variablen Ventiltriebs erfolgen. Der Einsatz ist prinzipiell bei Reihenvierzylinder-, und Reihensechszylinder-Brennkraftmaschinen, sowie bei Sechszylinder- und Achtzylinder- und Zwölfzylinder-Brennkraftmaschinen mit V-Bauform möglich.

Die Erfindung ermöglicht die Nutzung einer Teilturbine mit besserer Ausnutzung des Abgasimpulses und der Aufrechterhaltung der Flutentrennung und auch Schaltungen für z. B. den Betrieb mit einem abgeschalteten Zylinder, sowie durch Umschalten die Nutzung der gesamten Turbine zur Erzielung der Nennleistung. Damit kann z. B. die Turbine insgesamt größer ausgelegt werden, um den Gegendruck in der Nennleistung zu reduzieren und gleichzeitig in der Teillast einen höheren Auflade- und Wirkungsgrad zu erreichen.

Die Ausgestaltung gemäß Patentanspruch 2 ist für eine 6-Zylinder Brennkraftmaschine vorgesehen und kann ebenfalls für eine Zwölfzylinder-Brennkraftmaschine der V-Bauart eingesetzt werden.

Die Ausgestaltung gemäß Patentanspruch 3 ist eine bevorzugte Ausführungsvariante für die Schaltung für einen Teillast- und einen Volllastbetrieb der Brennkraftmaschine mittels einer Deaktivierung von Gaswechsel-Auslassventilen.

Mit der Ausgestaltung gemäß Patentanspruch 4 ist in vorteilhafter Weiser eine Zylinderabschaltung für die Brennkraftmaschine möglich.

Die Ausgestaltung gemäß Patentanspruch 5 ist ein besonders bevorzugtes Ausführungsbeispiel.

Die Ausgestaltung gemäß Patentanspruch 6 ist eine bevorzugte Ausführungsvariante, wobei das Turbinenlaufrad aus zwei starr gekoppelten, axial zueinander angeordneten Turbinenlaufrädern besteht, die gemeinsam ein Verdichterrad des Abgasturboladers antreiben.

Die Ausgestaltung gemäß Patentanspruch 7 ist eine weitere besonders bevorzugte Ausführungsvariante für die Zusammenschaltung der einzelnen Fluten für einen Volllastbetrieb der Brennkraftmaschine bei der der Abgasgegendruck in vorteilhafter Weise abgesenkt wird.

Mit den erfindungsgemäßen Verfahren gemäß den Patentansprüchen 8 bis 10 ist der Teillastbetrieb der Brennkraftmaschine darstellbar.

Im Folgenden ist die Erfindung anhand von sechs Figuren näher erläutert.
- Figur 1: zeigt schematisch eine vierzylindrige, erfindungsgemäße Brennkraftmaschine für ein erstes Ausführungsbeispiel.
- Figur 2: zeigt schematisch eine vierzylindrige erfindungsgemäße Brennkraftmaschine für ein zweites Ausführungsbeispiel.
- Figur 3: zeigt schematisch eine vierzylindrige, erfindungsgemäße Brennkraftmaschine für ein drittes Ausführungsbeispiel.
- Figur 4: zeigt schematisch eine vierzylindrige, erfindungsgemäße Brennkraftmaschine für ein viertes Ausführungsbeispiel.
- Figur 5: zeigt schematisch eine sechszylindrige, erfindungsgemäße Brennkraftmaschine für ein fünftes Ausführungsbeispiel.
- Figur 6: zeigt schematisch eine sechszylindrige, erfindungsgemäße Brennkraftmaschine für ein sechstes Ausführungsbeispiel.

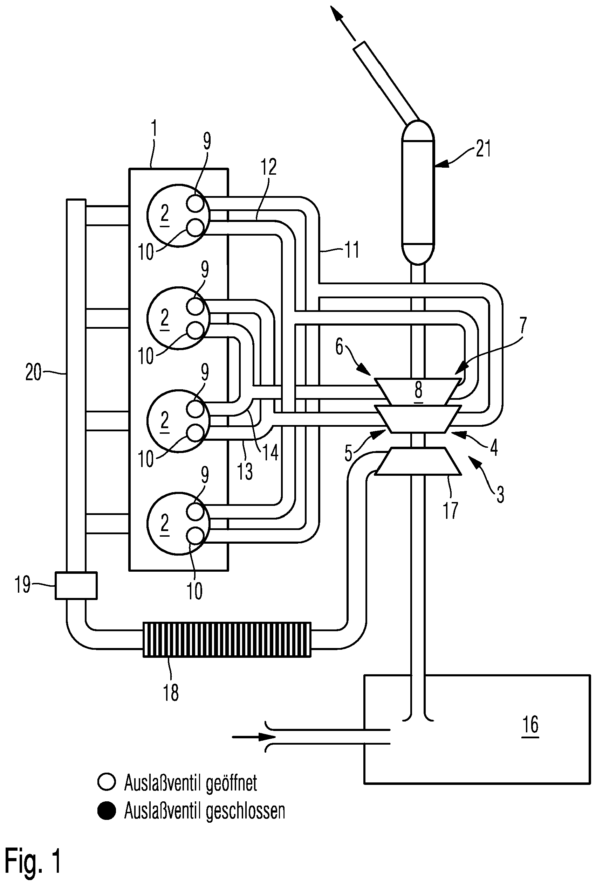

Im Folgenden gelten in den Figuren 1 bis 6 für gleiche Bauelemente die gleichen Bezugsziffern.

Fig. 1 zeigt ein erstes Ausführungsbeispiel für eine vierzylindrige, erfindungsgemäße Brennkraftmaschine 1. Eine Frischluft wird durch ein nicht beziffertes Ansaugsystem zuerst in einen Ansauggeräuschdämpfer 16 gefördert und durchläuft anschließend einen Verdichter 17 eines Abgasturboladers 3, von dem die Frischluft verdichtet und aufgeheizt wird. Ein Einströmen der Frischluft ist durch einen Pfeil in Richtung Ansauggeräuschdämpfer 16 dargestellt. Die aufgeheizte Frischluft wird anschließend in einem Ladeluftkühler 18 gekühlt und weiter durch eine Drosselklappe 19 in einen Luftsammler 20 gefördert und von dort in vier Zylinder 2 der Brennkraftmaschine 1 gefördert und verbrannt.

Jeder Zylinder 2 verfügt über zwei Gaswechsel-Auslassventile 9, 10 die für jeden Zylinder 2 gleich beziffert sind. Für jedes Gaswechsel-Auslassventil 9, 10 ist jeweils ein eigenes Abgasrohr 11, 12, 13, 14 vorgesehen, wobei jeweils ein Auslass-Gaswechselventil 9, 10 von zwei Zylindern 2 auf ein Abgasrohr 11, 12, 13, 14 zusammengeschalten sind. Somit werden jeweils zwei Zylinder 2 zu einer Zylindergruppe zusammengefasst. Die Zusammenfassung erfolgt entsprechend einer Zündfolge, mit einem gleichmäßigen Zündabstand.

Jedes der Abgasrohre 11, 12, 13, 14 ist mit einem separaten Abgaseinlass 4, 5, 6, 7 in einem nicht bezifferten Turbinengehäuse, in dem eine Turbine 8 drehbar gelagert ist und den Verdichter 17 antreibt, Abgas führend verbunden. Das Abgas verlässt das Turbinengehäuse durch einen nicht bezifferten Abgasstrang in dem eine Abgasreinigungsanlage 21 angeordnet ist. Das austretende Abgas ist mit einem Pfeil schematisch dargestellt.

Zusammengefasst kann gesagt werden, dass je zwei Zylinder 2 zu einer Zylindergruppe zusammengefasst sind und jeder Abgaseinlass 4, 5, 6, 7, mit einer Zylindergruppe durch ein Abgasrohr 11, 12, 13, 14 über je ein Gaswechselauslassventil 9, 10 je Zylinder 2 Abgas führend verbindbar ist und die Turbine 8 alle 180° Kurbelwinkel mit Abgas beaufschlagbar ist.

In dem vorliegenden Ausführungsbeispiel werden beim Betrieb der Brennkraftmaschine sämtliche Gaswechselauslassventile 9, 10 betätigt, ein Betrieb, der bei höherer Last oder Volllast der Brennkraftmaschine 1 durchgeführt wird. Ein schwarzer Kreis (innen weiß), bedeutet öffnendes Gaswechsel-Auslassventil 9, 10, beim Betrieb der Brennkraftmaschine. Ein vollständig schwarz gefärbter Kreis bedeutet nicht öffnendes Gaswechsel-Auslassventil 9, 10, beim Betrieb der Brennkraftmaschine, in Fig. 1 nicht vorliegend.

Das zu Figur 1 dargestellt gilt selbstverständlich auch für eine Brennkraftmaschine mit zwei Zylindern 2, wobei dann jeder Abgaseinlass 4, 5, 6, 7, mit jedem Zylinder 2 über ein Gaswechselauslassventil 9, 10 durch ein Abgasrohr 11, 12, 13, 14 abgasführend verbindbar ist und die Abgasturbine 8 alle 360° Kurbelwinkel mit Abgas beaufschlagbar ist. Diese Ausführungsform der zweizylindrigen Brennkraftmaschine ist figürlich nicht dargestellt.

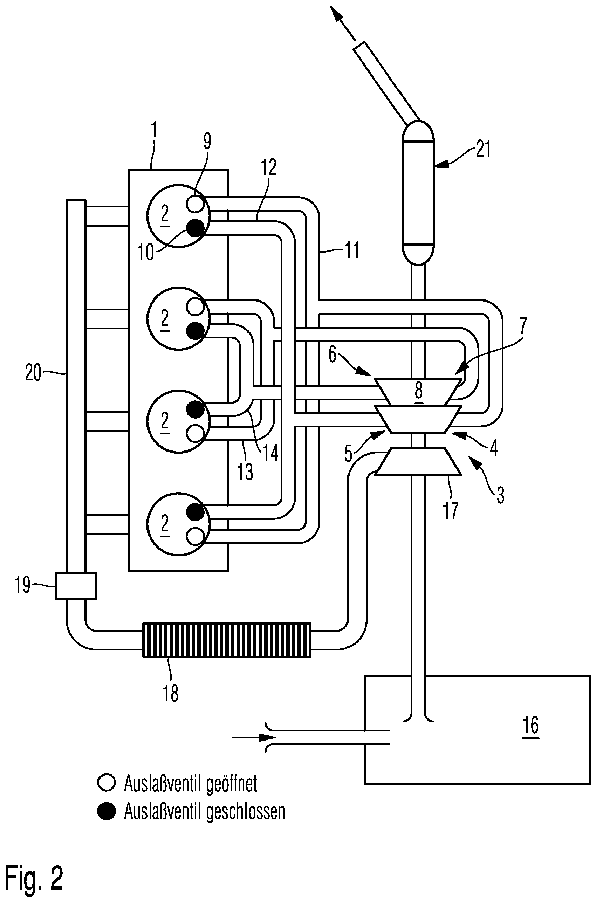

Die grundsätzliche Funktion der erfindungsgemäßen Brennkraftmaschine 1 gilt auch für die weiteren Figuren 2 bis 6, und wird bei denen nicht nochmals erörtert.

Figur 2 zeigt ein zweites Ausführungsbeispiel für eine erfindungsgemäße, vierzylindrige Brennkraftmaschine 1. Das zweite Ausführungsbeispiel unterscheidet sich vom ersten Ausführungsbeispiel dadurch, dass je Zylinder 2 ein Gaswechsel-Auslassventil 10 deaktivierbar ist. Dies kann beispielsweise mit einem hubvariablen Ventiltrieb erfolgen. Somit kann für diese Brennkraftmaschine 1 ein Verfahren dargestellt werden das dadurch gekennzeichnet ist, dass bei niedriger Last der Brennkraftmaschine 1 ein Gaswechselauslassventil 9, 10 deaktiviert wird.

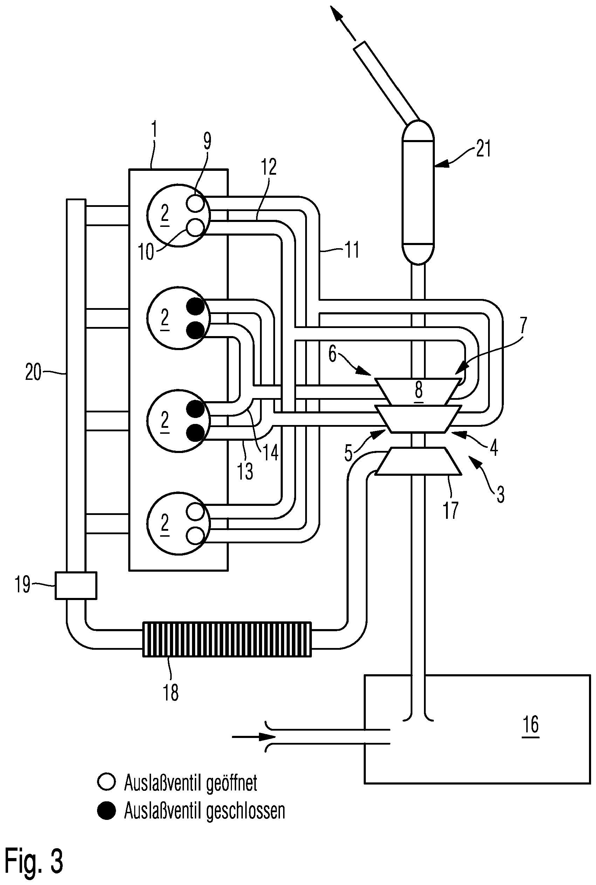

Figur 3 zeigt ein drittes Ausführungsbeispiel für eine erfindungsgemäße, vierzylindrige Brennkraftmaschine 1. Das dritte Ausführungsbeispiel unterscheidet sich von den ersten zwei Ausführungsbeispielen dadurch, dass für eine Zylindergruppe alle Gaswechselauslassventile 9, 10 deaktivierbar sind. Auch dieser Betrieb ist beispielsweise mit einem hubvariablen Ventiltrieb darstellbar. Mit dieser Konfiguration, auch Zylinderabschaltung genannt, ist ein Verfahren zum Betreiben der erfindungsgemäßen Brennkraftmaschine 1 darstellbar, wobei bei niedriger Last der Brennkraftmaschine 1 für eine Zylindergruppe je Zylinder 2 beide Gaswechsel-Auslassventile 9, 10 deaktiviert werden.

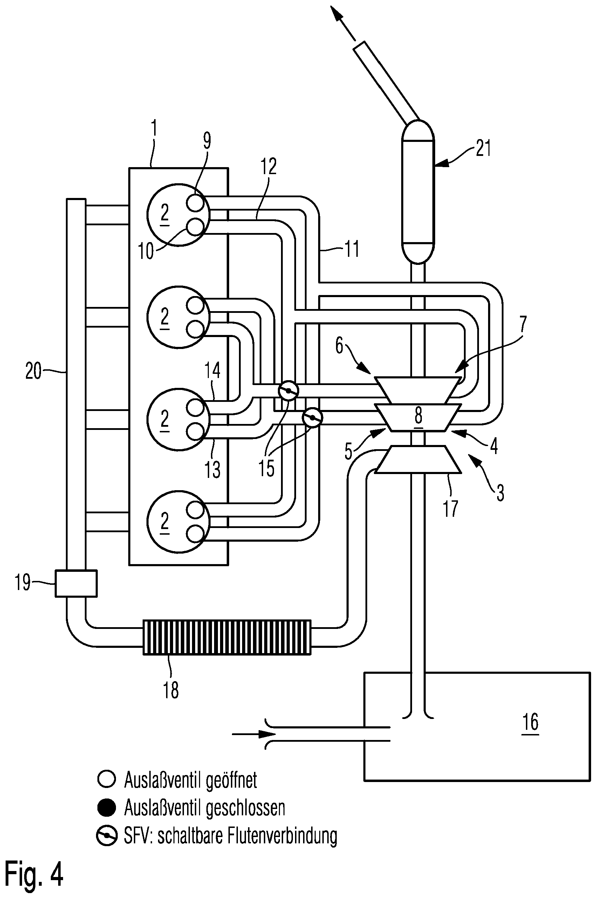

Figur 4 zeigt ein viertes Ausführungsbeispiel für eine erfindungsgemäße, vierzylindrige Brennkraftmaschine 1. Das Ausführungsbeispiel in Figur 4 unterscheidet sich von den ersten drei Ausführungsbeispielen dadurch, dass alle Gaswechselauslassventile 9, 10 beim Betrieb der Brennkraftmaschine stets betätigt werden, wobei jedoch in zwei Abgasrohren 11, 12, in Strömungsrichtung des Abgases nach deren Zylinderzusammenführung, jeweils eine Flutenverbindung 15 vorgesehen ist. Mit dieser können die Fluten miteinander verbunden werden, so dass in vorteilhafter Weise beim Volllastbetrieb der Brennkraftmaschine der Abgasgegendruck gesenkt wird, in vorliegenden Ausführungsbeispiel werden die Fluten 1 mit 4 und 2 mit 3 miteinander verbunden.

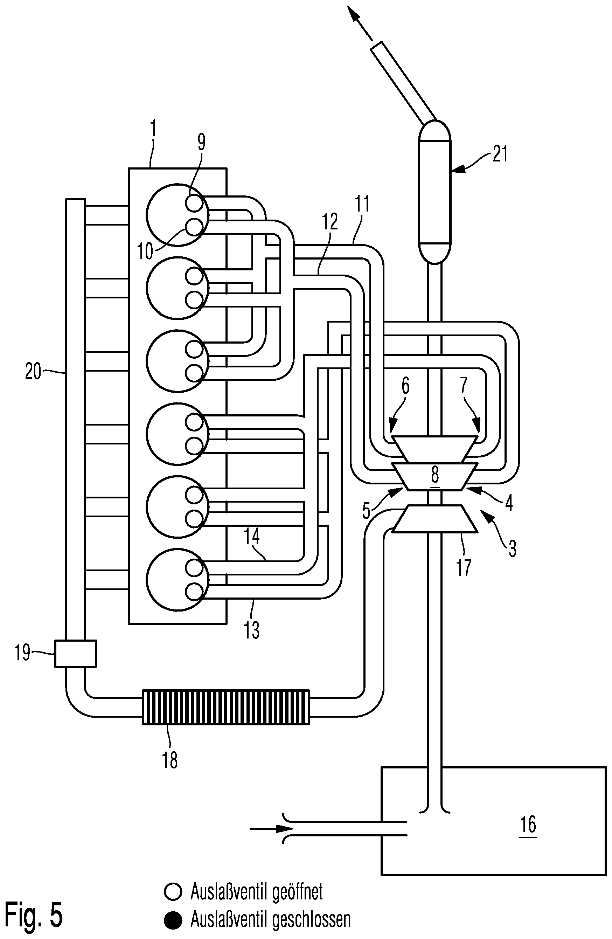

Figur 5 zeigt ein fünftes Ausführungsbeispiel für eine sechszylindrige, erfindungsgemäße Brennkraftmaschine 1. In diesem Ausführungsbeispiel sind beim Betrieb der Brennkraftmaschine wieder sämtliche Gaswechselauslassventile 9, 10 betätigbar. Es gilt das gleiche wie zu Figur 1 gesagte, nur mit dem Unterschied, dass jeweils drei Zylinder 2 zu einer Zylindergruppe zusammen gefasst sind.

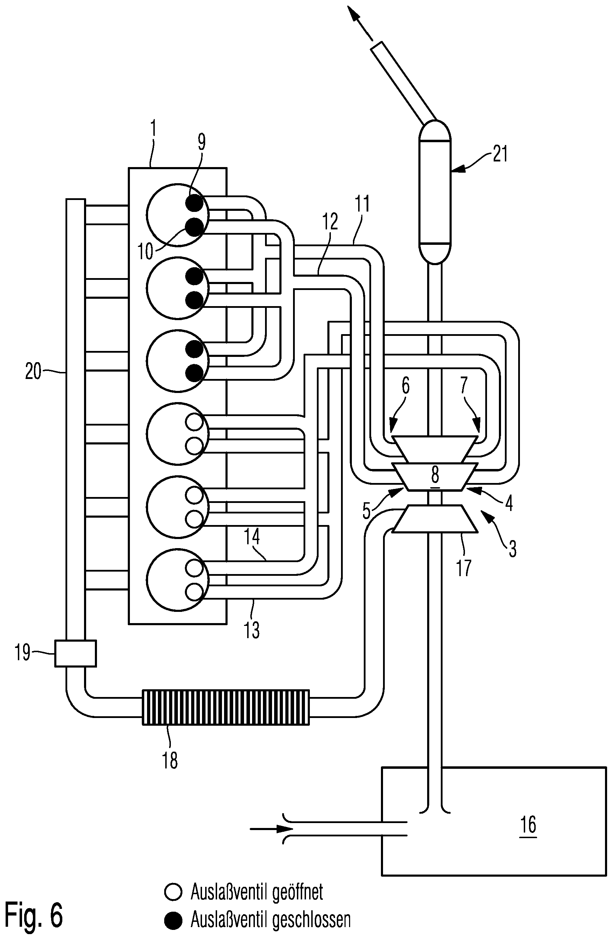

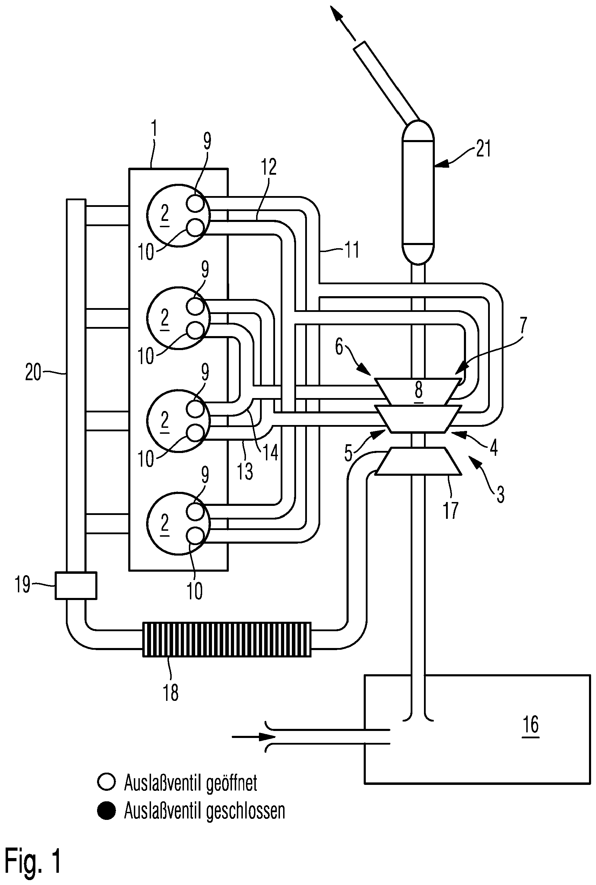

Figur 6 zeigt ein sechstes Ausführungsbeispiel für eine erfindungsgemäße sechszylindrige Brennkraftmaschine 1, analog zu der vierzylindrigen Brennkraftmaschine 1 in Figur 3. Auch mit diesem sechsten Ausführungsbeispiel ist wiederum eine Zylinderabschaltung darstellbar und es kann das Verfahren zum Betreiben der Brennkraftmaschine 1 dargestellt werden, wobei bei niedriger Last der Brennkraftmaschine 1 für eine Zylindergruppe je Zylinder 2 beide Gaswechselauslassventile 9, 10 deaktiviert werden. Es gilt das gleiche wie zu Figur 3 gesagte, nur mit dem Unterschied, dass jeweils drei Zylinder 2 zu einer Zylindergruppe zusammen gefasst sind.

Für alle Figuren 1 bis 6 gilt, dass das Turbinengehäuse über zwei Twin-Scroll Abgaseinlässe verfügt, deren Abgastrennung bis an das Turbinenlaufrad reicht. Jedoch können die Fluten mittels der Flutenverbindungen 15 miteinander Gas führend miteinander verbunden werden, um bei hoher oder Volllast der Brennkraftmaschine 1 den Abgasgegendruck abzusenken. Bevorzugt ist hierbei die Abgasturbine 8 eine sogenannte Doppelturbine.

Das Abschalten der Fluten kann grundsätzlich über den Ventiltrieb, beispielsweise über deaktivierbare Gaswechsel-Auslassventile, beispielsweise mittels eines variablen Ventiltriebs erfolgen. Der Einsatz ist prinzipiell bei Reihenvierzylinder-, und Reihensechszylinder-Brennkraftmaschinen, sowie bei Sechszylinder- und Achtzylinder- und Zwölfzylinder-Brennkraftmaschinen mit V-Bauform möglich.

Die Erfindung ermöglicht in vorteilhafter Weise die Nutzung einer Teilturbine (ein axialer Abschnitt der Turbine 8) mit besserer Ausnutzung des Abgasimpulses und der Aufrechterhaltung der Flutentrennung und auch Schaltungen für z. B. den Betrieb mit einem abgeschalteten Zylinder, sowie durch Umschalten die Nutzung der gesamten Turbine zur Erzielung der Nennleistung. Damit kann z. B. die Turbine insgesamt größer ausgelegt werden, um den Gegendruck in der Nennleistung zu reduzieren und gleichzeitig in der Teillast einen höheren Auflade- und Wirkungsgrad zu erreichen.

### Bezugszeichenliste

- 1: Brennkraftmaschine
- 2: Zylinder
- 3: Abgasturbolader
- 4: Abgaseinlass
- 5.: Abgaseinlass
- 6.: Abgaseinlass
- 7.: Abgaseinlass
- 8.: Abgasturbine
- 9.: Gaswechsel-Auslassventil
- 10.: Gaswechsel-Auslassventil
- 11.: Abgasrohr
- 12.: Abgasrohr
- 13.: Abgasrohr
- 14.: Abgasrohr
- 15.: Flutenverbindung
- 16.: Ansauggeräuschdämpfer
- 17.: Verdichter
- 18.: Ladeluftkühler
- 19.: Drosselklappe
- 20.: Luftsammler
- 21.: Abgasreinigungsanlage

## Patentansprüche

1. Brennkraftmaschine mit zumindest vier Zylindern (2) und mit einem einzigen Abgasturbolader (3) mit einem Turbinengehäuse mit vier Abgaseinlässen (4, 5, 6, 7), in dem eine Abgasturbine (8) drehbar angeordnet ist, wobei jeder Zylinder (2) zwei Gaswechsel-Auslassventile (9, 10) aufweist,
**dadurch gekennzeichnet, dass** je zwei Zylinder (2) zu einer Zylindergruppe zusammengefasst sind und jeder Abgaseinlass (4, 5, 6, 7) mit allen Zylindern genau einer Zylindergruppe durch ein Abgasrohr (11, 12, 13, 14) über je ein Gaswechsel-Auslassventil (9, 10) je Zylinder (2) Abgas führend verbindbar ist und die Abgasturbine (8) alle 180° Kurbelwinkel mit Abgas beaufschlagbar ist.

2. Brennkraftmaschine mit sechs Zylindern (2) und mit einem einzigen Abgasturbolader (3) mit einem Turbinengehäuse mit vier Abgaseinlässen (4, 5, 6, 7), in dem eine Abgasturbine (8) drehbar angeordnet ist, wobei jeder Zylinder (2) zwei Gaswechsel-Auslassventile (9, 10) aufweist,
**dadurch gekennzeichnet, dass** je drei Zylinder (2) zu einer Zylindergruppe zusammengefasst sind und jeder Abgaseinlass (4, 5, 6, 7) mit allen Zylindern genau einer Zylindergruppe durch ein Abgasrohr (11, 12, 13, 14) über ein Gaswechsel-Auslassventil (9, 10) je Zylinder (2) Abgas führend verbindbar ist und die Abgasturbine (8) alle 120° Kurbelwinkel mit Abgas beaufschlagbar ist.

3. Brennkraftmaschine nach einem der Patentansprüche 1 oder 2,
**dadurch gekennzeichnet, dass** für jeden Zylinder (2) ein Gaswechsel-Auslassventil (9, 10) deaktivierbar ist.

4. Brennkraftmaschine nach einem der Patentansprüche 1 oder 2,
**dadurch gekennzeichnet, dass** für eine Zylindergruppe alle Gaswechsel-Auslassventile (9, 10) deaktivierbar sind.

5. Brennkraftmaschine nach einem der Patentansprüche 1 bis 4,
**dadurch gekennzeichnet, dass** das Turbinengehäuse über zwei Twin-Scroll Abgaseinlässe verfügt.

6. Brennkraftmaschine nach einem der Patentansprüche 1 bis 5,
**dadurch gekennzeichnet, dass** die Abgasturbine (8) eine Doppelturbine ist.

7. Brennkraftmaschine nach Patentanspruch 1 oder 2,
**dadurch gekennzeichnet, dass** in jedem Abgasrohr (11, 12, 13, 14) einer Zylindergruppe eine Flutenverbindung (15) vorgesehen ist.

8. Verfahren zum Betreiben einer Brennkraftmaschine nach Patentanspruch 3,
**dadurch gekennzeichnet, dass** bei niedriger Last der Brennkraftmaschine (1) ein Gaswechsel-Auslassventil (9, 10) deaktiviert wird.

9. Verfahren zum Betreiben einer Brennkraftmaschine nach Patentanspruch 4,
**dadurch gekennzeichnet, dass** bei niedriger Last der Brennkraftmaschine (1) für eine Zylindergruppe je Zylinder (2) beide Gaswechsel-Auslassventile (9, 10) deaktiviert werden.

10. Verfahren zum Betreiben einer Brennkraftmaschine nach Patentanspruch 7,
**dadurch gekennzeichnet, dass** bei niedriger Last der Brennkraftmaschine (1) die Flutenverbindungen (15) geschlossen werden.

## Claims

1. An internal combustion engine having at least four cylinders (2) and having a single exhaust turbocharger (3) with a turbine housing with four exhaust inlets (4, 5, 6, 7), in which an exhaust-gas turbine (8) is rotatably arranged, wherein each cylinder (2) has two gas-exchange outlet valves (9, 10),
**characterised in that** two cylinders (2) each are combined to form a cylinder group and each exhaust inlet (4, 5, 6, 7) can be connected so as to conduct exhaust gas with all the cylinders of exactly one cylinder group through an exhaust pipe (11, 12, 13, 14) by way of one gas-exchange outlet valve (9, 10) per cylinder (2) and the exhaust-gas turbine (8) can be acted upon by exhaust gas every 180° crank angle.

2. An internal combustion engine having six cylinders (2) and having a single exhaust turbocharger (3) with a turbine housing with four exhaust inlets (4, 5, 6, 7), in which an exhaust-gas turbine (8) is rotatably arranged, wherein each cylinder (2) has two gas-exchange outlet valves (9, 10),
**characterised in that** three cylinders (2) each are combined to form a cylinder group and each exhaust inlet (4, 5, 6, 7) can be connected so as to conduct exhaust gas with all the cylinders of exactly one cylinder group through an exhaust pipe (11, 12, 13, 14) by way of one gas-exchange outlet valve (9, 10) per cylinder (2) and the exhaust-gas turbine (8) can be acted upon by exhaust gas every 120° crank angle.

3. An internal combustion engine according to one of Claims 1 or 2,
**characterised in that** one gas-exchange outlet valve (9, 10) can be deactivated for each cylinder (2).

4. An internal combustion engine according to one of Claims 1 or 2,
**characterised in that** all the gas-exchange outlet valves (9, 10) can be deactivated for one cylinder group.

5. An internal combustion engine according to one of Claims 1 to 4,
**characterised in that** the turbine housing has two twin-scroll exhaust inlets.

6. An internal combustion engine according to one of Claims 1 to 5,
**characterised in that** the exhaust-gas turbine (8) is a double turbine.

7. An internal combustion engine according to Claim 1 or 2,
**characterised in that** a scroll connection (15) is provided in each exhaust pipe (11, 12, 13, 14) of a cylinder group.

8. A method for operating an internal combustion engine according to Claim 3,
**characterised in that** at a low load on the internal combustion engine (1) one gas-exchange outlet valve (9, 10) is deactivated.

9. A method for operating an internal combustion engine according to Claim 4,
**characterised in that** at a low load on the internal combustion engine (1) for one cylinder group per cylinder (2) both gas-exchange outlet valves (9, 10) are deactivated.

10. A method for operating an internal combustion engine according to Claim 7,
**characterised in that** at a low load on the internal combustion engine (1) the scroll connections (15) are closed.

## Revendications

1. Moteur à combustion interne ayant au moins quatre cylindres (2) ainsi qu'un seul turbo compresseur de gaz d'échappement (3) ayant un carter de turbine comportant quatre entrées de gaz d'échappement (4, 5, 6, 7), dans lequel une turbine à gaz d'échappement (8) est montée mobile en rotation, chaque cylindre (2) comprenant deux soupapes d'échappement d'échange de gaz (9, 10),
**caractérisé en ce que**
deux cylindres (2) respectifs sont rassemblés en un groupe de cylindres et chaque entrée de gaz d'échappement (4, 5, 6, 7) peut être reliée en permettant le passage des gaz d'échappement avec tous les cylindres d'un seul groupe de cylindres par d'une conduite de gaz d'échappement (11, 12, 13, 14), par l'intermédiaire d'une soupape d'échappement d'échange de gaz (9, 10) respective pour chaque cylindre (2), et la turbine à gaz d'échappement (8) peut être alimentée en gaz d'échappement à chaque rotation du vilebrequin d'un angle de 180°.

2. Moteur à combustion interne ayant six cylindres (2) ainsi qu'un seul turbo compresseur de gaz d'échappement (3) ayant un carter de turbine comprenant quatre entrées de gaz d'échappement (4, 5, 6, 7) dans lequel une turbine à gaz d'échappement (8) est montée mobile en rotation, chaque cylindre (2) comprenant deux soupapes d'échappement d'échange de gaz (9, 10),
**caractérisé en ce que**
trois cylindres respectifs (2) sont rassemblés en un groupe de cylindres, et chaque entrée de gaz d'échappement (4, 5, 6, 7) peut être reliée en permettant le passage des gaz d'échappement avec tous les cylindres d'un seul groupe de cylindres par une conduite de gaz d'échappement (11, 12, 13, 14) par l'intermédiaire d'une soupape d'échappement d'échange de gaz (9, 10) respective pour chaque cylindre (2) et la turbine à gaz d'échappement (8) peut être alimentée en gaz d'échappement à chaque rotation de vilebrequin d'un angle de 120°.

3. Moteur à combustion interne conforme à l'une des revendications 1 et 2,
**caractérisé en ce que**
pour chaque cylindre (2), une soupape d'échappement d'échange de gaz (9, 10) peut être désactivée.

4. Moteur à combustion interne conforme à l'une des revendications 1 et 2,
**caractérisé en ce que**
pour un groupe de cylindres toutes les soupapes d'échappement d'échange de gaz (9, 10) peuvent être désactivées.

5. Moteur à combustion interne conforme à l'une des revendications 1 à 4,
**caractérisé en ce que**
le carter de turbine est équipé de deux entrées de gaz d'échappement à double volute.

6. Moteur à combustion interne conforme à l'une des revendications 1 à 5,
**caractérisé en ce que**
la turbine à gaz d'échappement (8) est une double turbine.

7. Moteur à combustion interne conforme à la revendication 1 ou 2,
**caractérisé en ce que**
dans chaque conduite de gaz d'échappement (11, 12, 13, 14) d'un groupe de cylindres, il est prévu, une liaison par inondation (15).

8. Procédé de gestion d'un moteur à combustion interne conforme à la revendication 3,
**caractérisé en ce qu'**
en cas de faible charge du moteur (1) une soupape d'échappement d'échange de gaz (9, 10) est désactivée.

9. Procédé de gestion d'un moteur à combustion interne conforme à la revendication 4,
**caractérisé en ce qu'**
en cas de faible charge du moteur à combustion interne (1), dans un groupe de cylindres, pour chaque cylindre (2) les deux soupapes d'échappement d'échange de gaz (9, 10) sont désactivées.

10. Procédé de gestion d'un moteur à combustion interne conforme à la revendication 7,
**caractérisé en ce qu'**
en cas de faible charge du moteur à combustion interne (1) les liaisons par inondation (15) sont fermées.
